# EUROPÄISCHE PATENTSCHRIFT

(11) **EP 2 542 931 B1**
(45) Veröffentlichungstag und Bekanntmachung des Hinweises auf die Patenterteilung: **03.06.2015**
(21) Anmeldenummer: 11718645.2
(22) Anmeldetag: 21.02.2011
(51) Int. Cl.: G02B 6/38

(54) **DOPPELSTECKVERBINDER FÜR LICHTWELLENLEITER**
DOUBLE PLUG-IN CONNECTOR FOR OPTICAL WAVEGUIDES
CONNECTEUR ENFICHABLE DOUBLE POUR CONDUCTEUR OPTIQUE

(30) Priorität: 03.03.2010 DE 102010010018
(43) Veröffentlichungstag der Anmeldung: 09.01.2013
(73) Patentinhaber: HARTING Electronics GmbH, 32339 Espelkamp (DE)
(72) Erfinder: LINDKAMP, Marc, 32312 Lübbecke (DE); LÜCKEMEIER, Martin, 32369 Rahden (DE); HOFFMANN, Rita, 32369 Rahden (DE)
(86) Internationale Anmeldenummer: PCT/DE2011/075028
(87) Internationale Veröffentlichungsnummer: WO 2011/107091

(56) Entgegenhaltungen:
- DE-A1- 10 114 144
- US-A- 5 157 749
- US-B1- 6 331 079

## Beschreibung

Die Erfindung betrifft einen Steckverbinder für Lichtwellenleiter gemäß dem Oberbegriff des unabhängigen Patentanspruchs 1.

Ein solcher Steckverbinder wird benötigt, um einerseits einen empfohlenen Mindestandruck des zu steckenden Lichtwellenleiters auf den opto-elektrischen Wandler im Gegenstecker zu realisieren, und um andererseits auch bei differierenden Abmaßen der Gegenstecker eine sichere Steckposition zu erreichen.

### Stand der Technik

Im Stand der Technik ist es bekannt, die Gegenstecker direkt auf Leiterplatten zu fixieren.

In der Druckschrift WO2004027482A1 wird erwähnt, dass die Abmessungen solcher auf Leiterplatten fixierbarer Gegenstecker Speziallösungen darstellen. Für den optischen Anschluss können somit keine der standardisierten optischen Steckverbinder (z.B. vom Typ LC oder LX.5 o.ä.) eingesetzt werden. Die Druckschrift schlägt dementsprechend eine Anschlussvorrichtung vor, die sich modulartig und flexibel an unterschiedlich standardisierte optische Steckverbindersysteme anpassen lässt. Die Anschlussvorrichtung umfasst ein vom jeweiligen Steckverbinder unabhängiges Basisteil, welches auf der Oberfläche der Schaltungsplatte befestigt ist und das opto-elektrische Bauelement umgibt. Weiterhin umfasst die Anschlussvorrichtung ein auf das jeweilige Steckverbindersystem abgestimmtes Kupplungsteil, welches an das Basisteil nach außen hin anschließt und am Basisteil befestigt ist, und welches eine Einstecköffnung zum Einstecken des standardisierten faseroptischen Steckverbinders aufweist.

Ein Nachteil dieser Anschlussvorrichtung besteht darin, dass für jedes Steckverbindersystem ein spezielles Kupplungssystem bereitgestellt und an das Basisteil angebracht werden muss.

Die Druckschrift US6331079B1 offenbart einen Steckverbinder für Lichtwellenleiter, der ein Steckverbindergehäuse mit einem Halteelement zum Haften zweier dazugehöriger Ferrulengehäuse aufweist.

Im Stand der Technik existiert das Problem, dass auf dem Markt Gegenstecker mit voneinander abweichenden Abmessungen existieren, so dass der Benutzer mit entsprechenden Kompatibilitätsproblemen konfrontiert ist.

### Aufgabenstellung

Der vorliegenden Erfindung liegt daher die Aufgabe zugrunde, einen kostengünstig herstellbaren Steckverbinder anzugeben, der in seinen Abmessungen einerseits zumindest einer üblichen Norm entspricht und der andererseits auch mit Gegensteckern, deren Abmessungen von dieser Norm abweichen, verwendet werden kann. Insbesondere soll der Steckverbinder mit derzeit marktüblichen Gegensteckern, welche mit opto-elektrischen Wandlern ausgestattet sind und direkt auf einer Leiterplatte fixierbar sind, verwendbar sein.

Diese Aufgabe wird dadurch gelöst, dass das Steckverbindergehäuse zwei Lagerzapfen aufweist, und dass die Arme mit jeweils einem Langloch versehen sind, in das die Lagerzapfen greifen, so dass das Haltelement innerhalb eines bestimmten Winkelbereichs federbeaufschlagt drehbar und axial verschiebbar ist.

Vorteilhafte Ausgestaltungen der Erfindung sind in den Ansprüchen 2 - 9 angegeben.

Bei der Erfindung handelt es sich um einen Steckverbinder für Lichtwellenleiter, der die geometrischen Abweichungen unterschiedlicher Gegenstecker ohne besondere Vorkehrungen automatisch ausgleicht. Insbesondere werden dabei nicht nur unterschiedliche Einstecktiefen axial zum Lichtwellenleiter, sondern auch senkrecht dazu existierende Abweichungen des Gegensteckers automatisch ausgeglichen.

Bei einem solchen Gegenstecker handelt es sich bevorzugt um einen Small Form-factor Plug-In-(SFP-)Transceiver. Dieser ist vorzugsweise in einen Metallkäfig (Cage) verrastend eingefügt, wobei der Metallkäfig mit einer Basisfläche, welche elektrische Kontakte beinhaltet, auf einer Leiterplatte angeordnet ist. Der SFP-Transceiver besitzt einerseits optische Anschlüsse sowie einen opto-elektrischen Wandler und weist andererseits elektrische Anschlüsse auf, die mit einem im hinteren Teil des Metallkäfigs vorhandenen Kartenrandsteckverbinder (Mezzazine) kontaktieren und über diesen elektrisch leitend mit der Leiterplatte verbunden sind. Eine Öffnung des Metallkäfigs ist mit einer Gehäusewand eines die Leiterplatte umgebenden Gerätegehäuses verbunden. An dieser Stelle weist die Gehäusewand eine Öffnung auf, die von der anderen Seite der Gehäusewand mit einem Übergabegehäuse oder einem Anschraubgehäuse abgeschlossen wird. Darüber wird der Gegenstecker mit einem erfindungsgemäßen Steckverbinder kontaktiert.

Bei diesem Kontaktierungsvorgang sollen die in Ferrulen gehaltenen Lichtwellenleiter des Steckverbinders mit einem empfohlenen Druck von etwa 5N gegen die optischen Anschlüsse des Gegensteckers gepresst werden, damit eine optimale Übertragung der optischen Signale gewährleistet ist:

Von Vorteil ist es dabei, dass das Haltelement durch das erste Federelement federbeaufschlagt um einen ersten Schiebeweg verschiebbar ist, weil sich der Steckverbinder dadurch horizontal, in Richtung der Ferrulenachse, an die Abmessungen des Gegensteckers anpasst.

Vorteilhaft ist es dabei weiterhin, wenn es sich bei dem ersten Federelement um eine Spiralfeder handelt, weil diese über den ersten Schiebeweg eine nahezu konstante Kraft von beispielsweise 15 N gewährleistet. Als besonders vorteilhaft hat sich dafür unter Berücksichtigung der Abmessungen marktüblicher Gegenstecker ein erster Schiebeweg zwischen 2,5 mm und 3 mm herausgestellt.

Weiterhin ist es vorteilhaft, dass das Halteelement um die Lagerzapfen des Einsatzes innerhalb eines bestimmten Winkelbereichs federbeaufschlagt drehbar ist, insbesondere ist das Halteelement hierbei mit seinen Armen an den beiden Lagerzapfen drehbar gelagert, weil sich der Steckverbinder dadurch nicht nur horizontal in Richtung der Ferrulenachse, sondern auch vertikal, also rechtwinklig zur Ferrulenachse, an die Abmessungen des Gegensteckers anpasst. Somit können auch vertikale geometrische Abweichungen des Gegensteckers ausgeglichen werden. Als besonders vorteilhaft hat sich dafür unter Berücksichtigung der Abmessungen marktüblicher Gegenstecker herausgestellt, dass senkrecht zur Ferrulenachse Abweichungen des Gegensteckers von etwa 0,8 mm ausgeglichen werden können. Dafür ist es besonders vorteilhaft, wenn das Halteelement mit seitlichen Blattfedern ausgestattet ist, weil dadurch im Grundzustand auch in vertikaler Richtung eine normgerechte Ausgangsposition festgelegt wird. Die bei vertikaler Auslenkung des Haltelements entstehende minimale Richtungsänderung des Lichtwellenleiters wird dabei durch existierende Freiräume der Ferrrulen in ihren Ferrulengehäusen ausgeglichen.

Um sowohl die horizontale Translationsbewegung als auch die vertikale Rotationsbewegung des Halteelements mit möglichst kostengünstigen Mitteln zu realisieren, ist es besonders vorteilhaft, dass in den Armen des Halteelements Langlöcher angeordnet sind, die in Richtung der Ferrulenachsen weisen. Diese Langlöcher umgreifen die Lagerzapfen, so dass das Haltelement in Richtung der Ferrulenachsen verschiebbar und rechtwinklig dazu drehbar an den Lagerzapfen befestigt ist.

Besonders vorteilhaft ist es dabei, wenn jede der beiden Ferrulen des Steckverbinders jeweils mittels einer weiteren Feder innerhalb ihres Ferrulengehäuses federnd und um einen zweiten Schiebeweg axial verschiebbar gelagert ist. Weiterhin ist es vorteilhaft, wenn die Summe der Federkonstanten der beiden weiteren Federn kleiner ist als die Federkonstante des ersten Federelements, weil der Federmechanismus des ersten Federelements erst in Erscheinung tritt, wenn die Ferrulengehäuse des Steckverbinders mit vollständig darin eingeschobenen Ferrulen gegen den Gegenstecker stoßen. Dies ist dies von besonderem Vorteil, weil dadurch die vorgegebene Andruckkraft der Ferrulen gegen die optischen Anschlüsse des Gegensteckers von etwa 5N gewährleistet ist. Insbesondere gilt dies, wenn die Ferrulen vollständig in das Ferrulengehäuse hinein verschiebbar sind.

Die beiden weiteren Federn, mit denen die Ferrulen innerhalb ihrer Ferrulengehäuse federnd gelagert sind, können über den zweiten Schiebeweg Längenunterschiede bis zu 1,3 mm ausgleichen. Da das Haltelement in seinen Armen entsprechende Langlöcher aufweist, mit denen es die Lagerzapfen umgreift und somit axial zur den Ferruten verschiebbar im Gehäuse gelagert ist, kann das erste Federelement, über welches das Halteelement elastisch mit dem Gehäuse verbunden ist, über den ersten Schiebeweg auch größere Längenunterschiede von beispielsweise 2,8 mm ausgleichen. In der Summe können in dieser Konfiguration somit Einstecktiefen mit Differenzen von insgesamt etwa 4 mm ausgeglichen werden.

Um die unvermeidliche Krümmung des Lichtwellenleiters innerhalb des Steckergehäuses bei einer Verkürzung des Schiebeweges des Schiebegehäuses aufzufangen, ist eine gewisse Mindestlänge des Steckergehäuses erforderlich.

Besonders vorteilhaft ist es, wenn das Steckverbindergehäuse mehrstückig ausgeführt ist und ein Umgehäuse sowie einen darin eingefügten Einsatz umfasst, weil dadurch universelle Steckverbindergehäuse als Umgehäuse verwendet werden können, was die Herstellungskosten senkt.

Vorteilhaft ist weiterhin, dass das Halteelement aus einem elastisch verformbaren Material besteht, weil seine parallelen Arme mit ihren Langlöchern bei der Montage des Steckverbinders über die abgerundeten Lagerzapfen des Gehäuses geschoben werden und daran verrasten. Hierfür ist es von Vorteil, wenn die Lagerzapfen an zwei parallelen Außenwänden einer rechteckigen Anformung des Halteelements angeordnet sind und entsprechende Aufgleitschrägen aufweisen.

Wenn das Halteelement aus einem elastisch verformbaren Material besteht, werden auch die Produktionskosten gesenkt, weil dadurch die seitlichen Blattfedern zusammen mit dem Halteelement einstückig ausgeführt sein können.

### Ausführungsbeispiel

Ein Ausführungsbeispiel der Erfindung ist in der Zeichnung dargestellt und wird im Folgenden näher erläutert. Es zeigen:
- Fig. 1a: eine Explosionsdarstellung eines Steckverbinders,
- Fig. 1b: einen relevanten Ausschnitt aus der Explosionsdarstellung aus einem anderen Blickwinkel mit einem Halteelement, einem Federelement und einem Einsatz,
- Fig. 2: eine Seitenansicht des Einsatzes mit dem Halteelement, und
- Fig. 3: eine Draufsicht auf den Einsatz mit dem Halteelement.

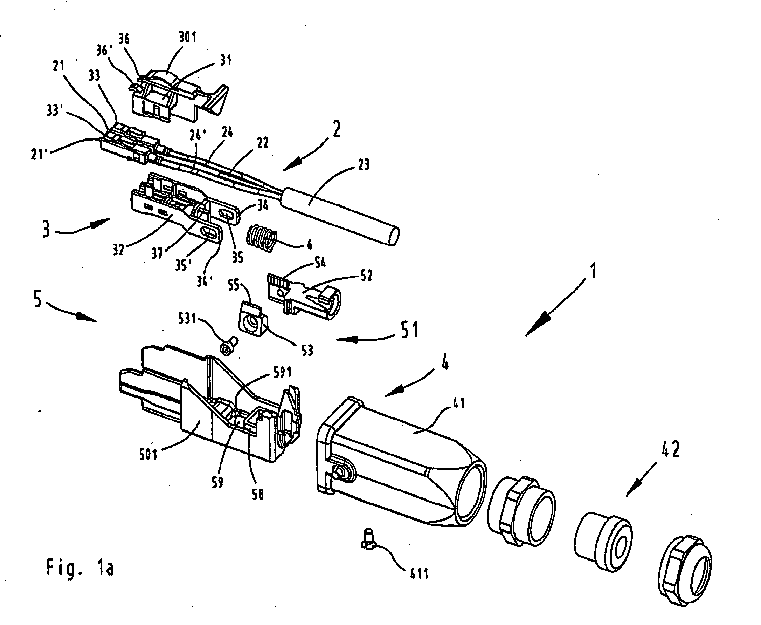

In der Fig.1a ist in einer Explosionszeichnung ein Steckverbinder 1 für Lichtwellenleiter 24,24' mit seinen einzelnen Teilen dargestellt. Dieser Steckverbinder 1 umfasst ein Halteelement 3 mit einem Oberteil 31 und einem Unterteil 32 sowie zwei dazugehörige Ferrulengehäuse 33,33', die dafür vorgesehen sind, jeweils eine Ferrule 21,21' mit einem darin eingebetteten Lichtwellenleiter 24,24' aufzunehmen. Die Lichtwellenleiter 24,24' sind zusammen mit einem Zugentlastungselement 22 und einem Mantel 23 Bestandteil eines Lichtwellenleiterkabels 2.

Weiterhin gehört zum Steckverbinder 1 ein Steckverbindergehäuse 4, umfassend ein Umgehäuse 41 und einen im Zinkdruckgussverfahren hergestellten Einsatz 5. Der Einsatz 5 umfasst eine Halterung 501 und ein Klemmelement 51.

Das Klemmelement 51 umfasst einen Block 52 und eine damit verschraubbare Klammer 53. Der Block 52 und die Klammer 53 weisen jeweils eine freistehende Klemmplatte 54,55 auf, die dafür vorgesehen sind, beim Zusammenschrauben mit einer ersten Schraube 531 gegeneinandergepresst zu werden und das im Lichtwellenleiterkabel 2 vorhandene Zugentlastungselement 22 zwischen einander zur Zugentlastung des Lichtwellenleiterkabels 2 einzuklemmen. Der Einsatz 5 ist in ein zum Steckverbindergehäuse 4 gehörendes Umgehäuse 41 einsetzbar. Weiterhin umfasst das Umgehäuse 41 eine mehrstückige Kabelverschraubung 42, durch welche das durch das Umgehäuse 41 geführte Lichtwellenleiterkabel 2 führbar und an der es verschraubbar ist.

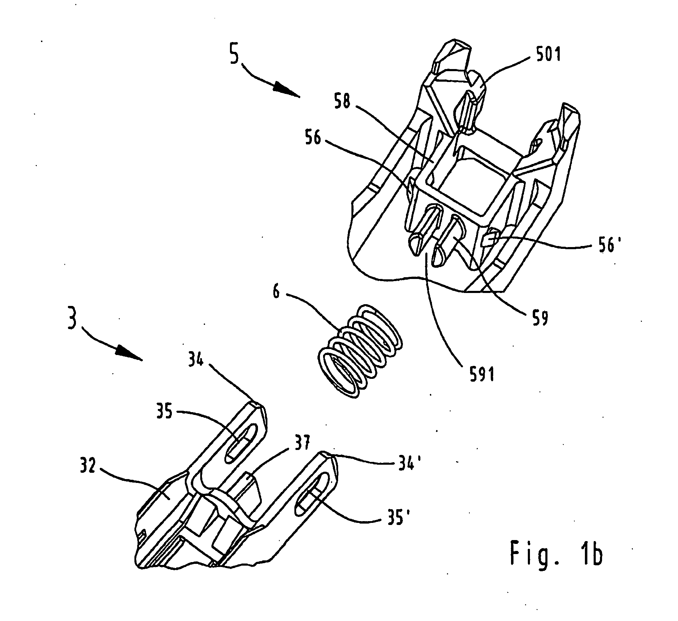

In der Fig. 1b ist besonders gut erkennbar, wie das Halteelement 3, das aus einem elastisch verformbaren Material besteht, über das erste Federelement 6 mit dem Einsatz 5 verbindbar ist.

Die Halterung 501 des Einsatzes 5 weist eine rechteckige Anformung 58 auf, die einen inneren Hohlraum einschließt. An die rechteckige Anformung 58 ist eine zylindrische Anformung 59 mit einem Führungsschlitz 591 angeformt.

Das Halteelement 3 weist einen flachen Führungszapfen 37 auf, der parallel zu und mittig zwischen den beiden Armen 34,34' angeordnet ist.

Das erste Federelement 6, das in Form einer Spiralfeder ausgeführt ist, wird bei der Montage des Steckverbinders 1 über die zylindrische Anformung 59 geschoben und dort gehalten. Die Arme 34,34' des Halteelements 3 werden über die Lagerzapfen 56,56' geschoben, die zu diesem Zweck in der Zeichnung nicht näher bezeichnete Aufgleitschrägen aufweisen. Daraufhin rasten die Arme 34,34' mit ihren Langlöchern 35, 35' an den Lagerzapfen 56,56' ein. Gleichzeitig greift der flache Führungszapfen 37 in das spiralfederförmige erste Federelement 6 hinein und wird unter entsprechender Federspannung in den Führungsschlitz 591 der zylindrischen Anformung 59 gesteckt.

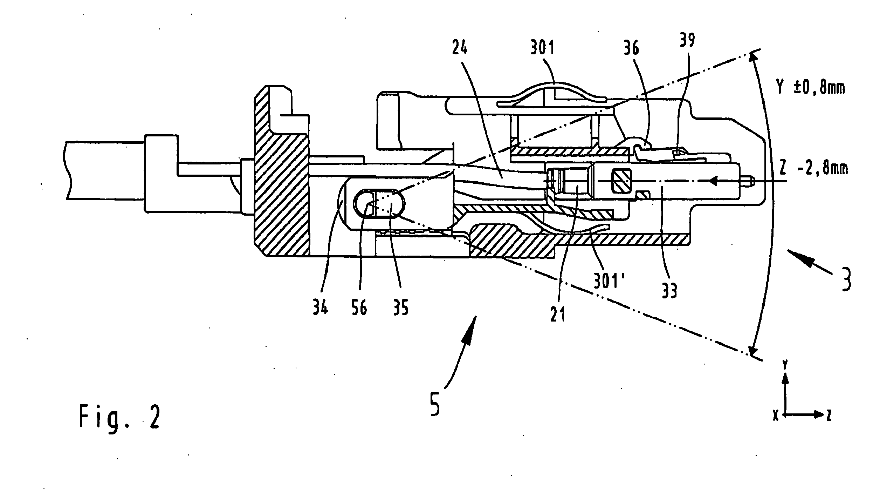

Die Fig. 2 zeigt einen Teil des Steckverbinders 1 in einer Seitenansicht mit Blickrichtung entlang der X-Achse eines Koordinatensystems. In dieser Ansicht ist das Halteelement 3 sowie ein dazugehöriger Arm 34 mit einem Langloch 35 dargestellt. Das Langloch 35 umgreift einen Lagerzapfen 56 des Einsatzes 5 und ermöglicht gleichzeitig eine Translationsbewegung des Halteelements 3 in Z-Richtung sowie eine geringfügige Rotationsbewegung des Halteelements 3 um eine X-Achse in Y-Richtung. Der weitere Verlauf einer an den Arm anschließenden Seitenwand des Halteelements 3 ist nicht dargestellt, wodurch ein Blick auf den inneren Aufbau freigegeben wird. An zwei gegenüberliegenden Seiten des Einsatzes 5 sind seitliche Blattfedern 301,301' einseitig festgelegt angeformt. Diese Blattfedern 301,301' zentrieren das Haltelement 3 und damit die Ferrulen 21,21' im Grundzustand des montierten Steckverbinders 1 normgerecht. Weiterhin weist das Halteelement 3 für jedes Ferrulengehäuse 33 eine Nase 36 auf, die eine Verrastungsvorrichtung 39 des jeweiligen Ferrulengehäuses 33 herunterdrückt, um ein Verrasten im Gegenstecker zu verhindern.

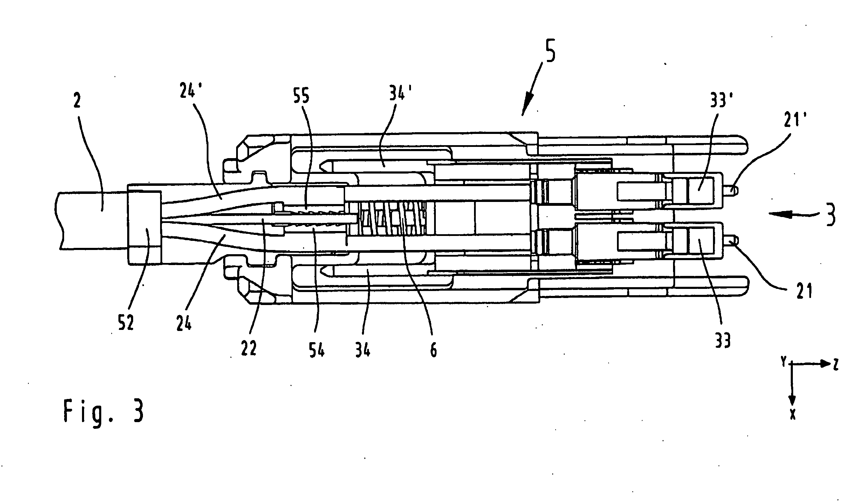

Die Fig. 3 zeigt einen Teil des Steckverbinders 1 ohne das Oberteil 31 in einer Draufsicht mit Blickrichtung entlang der Y-Achse des Koordinatensystems. Dabei ist der Zugentlastungsmechanismus besonders gut zu sehen. Die beiden Klemmplatten 54,55 klemmen das Zugentlastungselement 22 des Lichtwellenleiterkabels 2 zwischen einander ein.

Bei der Montage wird das Lichtwellenleiterkabel 2 mit seinen Ferrulen zunächst durch die Kabelverschraubung und durch das Umgehäuse geführt. Dann werden die Ferrulengehäuse 33,33' in das Unterteil 32 eingefügt und darin verrastet. Daraufhin wird das Oberteil 31 auf das Unterteil 32 gesetzt und mit Rastmitteln daran verrastet. Das erste Federelement 6 wird über die zylindrische Anformung 59 geschoben. Daraufhin wird der flache Führungszapfen 37 des Halteelements 3 in das Federelement 6 eingeführt und unter einer entsprechenden Federspannung in den Führungsschlitz 591 geschoben. Gleichzeitig werden die Arme 34,34' des Hafteelements 3 über parallele Seitenwände der rechteckigen Anformung 58 und über Aufgleitschrägen der an einander gegenüberliegenden Wänden der rechteckigen Anformung 58 angeordneten Lagerzapfen 56 geschoben. Daraufhin verrasten die Arme 34,34' mit ihren Langlöchern 35,35' an den Lagerzapfen 56.

Das Zugentlastungselement 22 des Lichtwellenleiterkabels 2 wird im Klemmelement 51 zwischen den Klemmplatten 54,55 angeordnet. Mit einer ersten Schraube 531 wird die Klammer 53 gegen den Block 52 geschraubt. Das Zugentlastungselement 22 wird dadurch zwischen den Klemmplatten 54,55 eingeklemmt. Das Klemmelement wird daraufhin in den inneren Hohlraum der rechteckige Anformung 58 des Einsatzes 5 eingefügt, wodurch eine Zugentlastung des Lichtwellenleiterkabels 2 gewährleistet ist.

Die Anordnung, bestehend aus Einsatz 5 und Halteelement 3 wird daraufhin in das Umgehäuse 41 eingefügt und dort mit einer zweiten Schraube 411 festgeschraubt.

Das Lichtwellenleiterkabel 2 wird mittels der Kabelverschraubung 42 am Umgehäuse 41 fixiert.

### Steckverbinder für Lichtwellenleiter

Az.: P210-10 EP P 9
- 1: Steckverbinder

- 2: Lichtwellenleiterkabel
- 21,21': Ferrulen
- 22: Zugentlastungselement
- 23: Mantel
- 24,24': Lichtwellenleiter

- 3: Halteelement
- 301,301': Blattfedern
- 31: Oberteil
- 32: Unterteil
- 33,33': Ferrulengehäuse
- 34,34': Arme
- 35,35': Langlöcher
- 36,36': Nasen
- 37: flacher Führungszapfen
- 39,39': Verrastungsvorrichtung

- 4: Steckverbindergehäuse
- 41: Umgehäuse
- 411: zweite Schraube
- 42: Kabelverschraubung

- 5: Einsatz
- 501: Halterung
- 51: Klemmelement
- 52: Block
- 53: Klammer
- 531: erste Schraube
- 54,55: Klemmplatten
- 56,56': Lagerzapfen
- 58: rechteckige Anformung
- 59: zylindrische Anformung
- 591: Führungsschlitz

- 6: erstes Federelement

## Patentansprüche

1. Steckverbinder (1) für Lichtwellenleiter (24,24'), insbesondere zum Stecken in und Kontaktieren mit einem Gegenstecker, welcher mit einem opto-elektrischen Wandler ausgestattet ist,
wobei der Steckverbinder (1) ein Steckverbindergehäuse (4) mit einem Einsatz (5) und ein Halteelement (3) zum Halten zweier dazugehörender Ferrulengehäuse (33,33') aufweist, wobei jedes dieser Ferrulengehäuse (33,33') dafür vorgesehen ist, eine Ferrule (21,21') mit einem darin eingebetteten Lichtwellenleiter (24,24') aufzunehmen,
wobei das Haltelement (3) über ein erstes Federelement (6) elastisch mit dem Steckverbindergehäuse (4) verbunden ist,
**dadurch gekennzeichnet, dass**
der Einsatz (5) zwei Lagerzapfen (56,56') aufweist und das Halteelement (3) zwei parallele Arme (34,34') mit jeweils einem Langloch (35, 35') aufweist,
so dass das Halteelement (3) um die Lagerzapfen (56,56') des Einsatzes (5) innerhalb eines bestimmten Winkelbereichs federbeaufschlagt drehbar und um einen ersten Schiebeweg axial zu den Ferrulen (21,21') federbeaufschlagt verschiebbar an dem Steckverbindergehäuse (4) gehalten ist.

2. Steckverbinder nach Anspruch 1, **dadurch gekennzeichnet, dass** das Steckverbindergehäuse (4) mehrstückig ausgeführt ist und ein Umgehäuse (41) sowie den darin eingefügten Einsatz (5) umfasst,.

3. Steckverbinder nach Anspruch 1, **dadurch gekennzeichnet, dass** das erste Federelement (6) in Form einer Spiralfeder ausgeführt ist.

4. Steckverbinder nach Anspruch 1, **dadurch gekennzeichnet,**
**dass** das Haltelement (3) mindestens eine seitliche Blattfeder (301,301') zu seiner Zentrierung innerhalb des Steckverbinders (1) besitzt.

5. Steckverbinder nach Anspruch 4, **dadurch gekennzeichnet,**
**dass** das Halteelement (3) aus einem elastisch verformbaren Material besteht und dass die mindestens eine seitliche Blattfeder (301,301') zusammen mit dem Halteelement (3) einstückig ausgeführt ist

6. Steckverbinder nach einem der Ansprüche 4 bis 5, **dadurch gekennzeichnet, dass** es sich bei der mindestens einen seitlichen Blattfeder (301,301') um zwei Blattfedern handelt, die auf gegenüberliegenden Seiten des Halteelements (3) angeordnet sind.

7. Steckverbinder nach Anspruch 1, **dadurch gekennzeichnet,**
**dass** jede Ferrule (21,21') mittels einer weiteren Feder innerhalb ihres Ferrulengehäuses (33,33') federnd und um einen zweiten Schiebeweg axial verschiebbar gelagert ist.

8. Steckverbinder nach Anspruch 7, **dadurch gekennzeichnet,**
**dass** der zweite Schiebeweg kleiner ist als der erste Schiebeweg.

9. Steckverbinder nach Anspruch 7, **dadurch gekennzeichnet,**
**dass** die Summe der Federkonstanten der beiden weiteren Federn kleiner ist als die Federkonstante des ersten Federelements (6).

## Claims

1. A plug connector (1) for optical waveguides (24, 24'), in particular for plugging into and contacting with a mating plug which is equipped with an optoelectric transducer,
the plug connector (1) including a plug connector housing (4) having an insert (5) and a holding element (3) for holding two associated ferrule housings (33, 33'), each of these ferrule housings (33, 33') being provided for receiving a ferrule (21, 21') with an optical waveguide (24, 24') embedded therein,
the holding element (3) being elastically connected to the plug connector housing (4) by means of a first spring element (6),
**characterized in that**
the insert (5) includes two bearing pins (56, 56'), and the holding element (3) includes two parallel arms (34, 34') having one elongated hole (35, 35') each,
so that the holding element (3) is rotatable about the bearing pins (56, 56') of the insert (5) within a specific angular range in a spring-loaded manner and is held on the plug connector housing (4) so as to be displaceable by a first displacement path axially in relation to the ferrules (21, 21') in a spring-loaded manner.

2. The plug connector according to claim 1, **characterized in that** the plug connector housing (4) is formed from a plurality of pieces and comprises an outer housing (41) as well as the insert (5) inserted therein.

3. The plug connector according to claim 1, **characterized in that** the first spring element (6) is configured in the form of a spiral spring.

4. The plug connector according to claim 1, **characterized in that** the holding element (3) has at least one lateral leaf spring (301, 301') for centering it within the plug connector (1).

5. The plug connector according to claim 4, **characterized in that** the holding element (3) consists of an elastically deformable material, and that the at least one lateral leaf spring (301, 301') is formed in one piece together with the holding element (3).

6. The plug connector according to any of claims 4 to 5, **characterized in that** the at least one lateral leaf spring (301, 301') is two leaf springs which are arranged on opposite sides of the holding element (3).

7. The plug connector according to claim 1, **characterized in that** each ferrule (21, 21') is spring-mounted within its ferrule housing (33, 33') by means of a further spring and is mounted so as to be axially displaceable by a second displacement path.

8. The plug connector according to claim 7, **characterized in that** the second displacement path is shorter than the first displacement path.

9. The plug connector according to claim 7, **characterized in that** the sum of the spring constants of the two further springs is smaller than the spring constant of the first spring element (6).

## Revendications

1. Connecteur enfichable (1) pour guide d'ondes optiques (24, 24'), en particulier pour l'enfichage dans un connecteur antagoniste et la mise en contact avec celui-ci, lequel est équipé d'un convertisseur optoélectrique,
le connecteur enfichable (1) présentant un boîtier (4) de connecteur enfichable qui comporte un insert (5) et un élément de retenue (3) pour retenir deux boîtiers d'embout (33, 33') associés, chacun de ces boîtiers d'embout (33, 33') étant destiné à recevoir un embout (21, 21') avec un guide d'ondes optiques (24, 24') inséré dans celui-ci,
l'élément de retenue (3) étant relié élastiquement au boîtier (4) de connecteur enfichable au moyen d'un premier élément ressort (6),
**caractérisé en ce que**
l'insert (5) présente deux tourillons (56, 56') et l'élément de retenue (3) présente deux bras parallèles (34, 34') qui comportent chacun un trou oblong (35, 35'),
de telle sorte que l'élément de retenue (3) est maintenu rotatif autour des tourillons (56, 56') de l'insert (5) dans une plage angulaire déterminée par sollicitation par ressort et est maintenu sur le boîtier (4) de connecteur enfichable de manière à être déplaçable sur un premier trajet de déplacement axialement par rapport aux embouts (21, 21') par sollicitation par ressort.

2. Connecteur enfichable selon la revendication 1, **caractérisé en ce que** le boîtier (4) de connecteur enfichable est réalisé en plusieurs pièces et comprend un boîtier extérieur (41) ainsi que l'insert (5) inséré dans celui-ci.

3. Connecteur enfichable selon la revendication 1, **caractérisé en ce que** le premier élément ressort (6) est réalisé sous forme de ressort en spirale.

4. Connecteur enfichable selon la revendication 1, **caractérisé en ce que** l'élément de retenue (3) possède au moins un ressort à lames latéral (301, 301') pour son centrage à l'intérieur du connecteur enfichable (1).

5. Connecteur enfichable selon la revendication 4, **caractérisé en ce que** l'élément de retenue (3) est réalisé en une matière élastiquement déformable, et **en ce que** ledit au moins un ressort à lames latéral (301, 301') est réalisé d'un seul tenant ensemble avec l'élément de retenue (3).

6. Connecteur enfichable selon l'une des revendications 4 à 5, **caractérisé en ce que** concernant ledit au moins un ressort à lames latéral (301, 301'), il s'agit de deux ressorts à lames agencés sur des côtés opposés de l'élément de retenue (3).

7. Connecteur enfichable selon la revendication 1, **caractérisé en ce que** chaque embout (21, 21') est monté à ressorts à l'intérieur de son boîtier d'embout (33, 33') au moyen d'un autre ressort et de manière axialement déplaçable sur un deuxième trajet de déplacement.

8. Connecteur enfichable selon la revendication 7, **caractérisé en ce que** le deuxième trajet de déplacement est inférieur au premier trajet de déplacement.

9. Connecteur enfichable selon la revendication 7, **caractérisé en ce que** la somme des constantes de rappel des deux autres ressorts est inférieure à la constante de rappel du premier élément ressort (6).
